## Europäisches Patentamt
### European Patent Office
### Office européen des brevets

(11) Publication number: **0 252 049**
**A2**

(12) **EUROPEAN PATENT APPLICATION**

(21) Application number: **87850207.9**

(22) Date of filing: **24.06.87**

(51) Int. Cl.⁴: **B 23 B 27/18**
**B 23 K 31/04, C 04 B 37/02**

(30) Priority: **27.06.86 SE 8602885**

(43) Date of publication of application:
**07.01.88 Bulletin 88/01**

(84) Designated Contracting States: **DE FR GB IT SE**

(71) Applicant: **SANDVIK AKTIEBOLAG**
**S-811 81 Sandviken 1 (SE)**

(72) Inventor: **Pettersson, Roland Östen**
**Tulpangatan 3**
**S-742 00 Östhammar (SE)**

**Edvardsson, Jan Gustav**
**Hyttgatan 11 B**
**S-811 30 Sandviken (SE)**

(74) Representative: **Östlund, Alf Olof Anders et al**
**Sandvik AB Patent Department**
**S-811 81 Sandviken (SE)**

(54) Brazed article of coated cemented carbide or coated ceramics.

(57) According to the invention there are now available articles in which coated elements of cemented carbide or ceramics have been joined to a holder by means of conventional brazing or soldering technique.

EP 0 252 049 A2

Bundesdruckerei Berlin

# Description

## Brazed article of coated cemented carbide or coated ceramics

The present invention relates to articles in which coated elements of cemented carbide and/or ceramics have been joined to a holder, usually a steel body, by means of conventional brazing or soldering technique. The task of the elements in the articles is to cut a different material and/or to resist water.

Since long time there have been available cutting tools with uncoated cemented carbide inserts and wear parts with uncoated cemented carbide articles brazed to a steel body. The invention relates among other things to such articles, characterized in, that they before the brazing to the steel body have been coated with one or more wear resistant surface layers of metal-carbides,-nitrides,-oxides or mixtures or compounds thereof, at which the outermost layer shall preferably be a carbide, nitride or carbonitride. The coating by CVD- or PVD-technique is the same as what is being used to increase the wear resistance of conventional, mechanically clamped cemented carbide indexable cutting inserts. In the same way the wear resistance of the brazed tools is increased by coating of the cemented carbide elements before the brazing. It is also known that the life of uncoated brazed cemented carbide tools can be increased by coating the entire tools by means of PVD-technique. Conventional solders stand the coating temperatures which are necessary. On the other hand, conventional CVD-technique can not be used for coating at such low temperatures as available solders demand. Coating by CVD-technique gives more wear resistant layers, however, and the manufacturing can be done at lower costs.

The difficulties of brazing ceramic elements to steel parts are well known. Usually vacuum technique is used having special solders with additions of active elements. For such elements which per se already have an excellent wear resistance the coating is primarily applied for making them brazable by conventional brazing technique which characterizes the manufacture of the articles according to the invention. The ceramic materials can be based upon oxides, nitrides or carbides or mixtures thereof. Examples of ceramic materials, on which the invention can be applied, are oxide ceramics (for example based upon $Al_2O_3$ or $ZrO_2$) and so called mixed ceramics (oxides mixed with one or more hard carbides, nitrides and similar and possibly binder metal). Other examples are silicon nitride based ceramics, in particular so called sialon materials (silicon nitride where silicon and nitrogen are substituted by aluminium and oxygen), silicon carbide ceramics (SiC with sintering aids such as carbon, boron or aluminium or reaction sintered SiC), $B_4C$, whisker reinforced ceramics (in particular, $Al_2O_3$ with whiskers of SiC may be mentioned) and superhard materials based on polycrystalline diamond or cubic boron nitride.

Examples of products where the invention is applicable, are cutting inserts for chipforming machining such as turning, milling or drilling sealing rings, support ribs, nozzles, motor details etc. Other examples are drills for long hole drilling having brazed cutting inserts and supporting pads and helical drills with CVD-coated cemented carbide inserts, in particular so called delta drills.

The invention has been found particularly suitable for support ribs of sialon and drills with cemented carbide inserts coated with preferably TiC-TiN-layers.

According to the invention the coated cemented carbide and/or ceramic articles are brazed by conventional soldering technique used in industry. The solder can for example be a silver solder of type Argobraze and the flux of type Easyflo flux 650.

At the brazing of large ceramic articles there are often placed metal shims of for example copper within the slot or recess in order to reduce the transition of thermomechanical stresses from the steel to the ceramics, which otherwise may lead to formation of cracks within the ceramic material. An alternative according to the invention is to grind a more or less regular pattern, for example a check pattern in the surface to be brazed after the coating of the ceramic article. In this way a poor wetting and an inferior brazing joint will be obtained in the ground areas which reduces the transition of the above mentioned stresses. Alternatively, a suitable pattern can be obtained during the coating by means of masking with for example a net of a suitable material.

### Example 1

To a cutting head of an ejector drill (Swedish patent 196 526) conventional cemented carbide cutting inserts within the ISO ranges P10-P40 were brazed. The inserts were coated before the brazing with 6μm TiC or TiN/TiC/TiN by means of CVD according to standard procedure. At the brazing there were used Easyflo flux 650 and the silver solder Argobraze. Some boring heads were cut by means of a section through steel, brazing joint and cutting insert. The surfaces being cut were ground and polished and analysed in a light optical microscope. The wetting between the coating upon the cemented carbide and the solder was found to be very good. Subsequent drilling tests showed that the strength of the joints was sufficient for the function of the drills.

### Example 2

To cutting heads of ejector drills there were brazed cutting inserts, ISO P15, CVD-coated with 5μm TiC + 3μm $Al_2O_3$ and outermost a few tenths of a μm TiN according to Example 1. Metallographic examinations showed that also in this case the wetting (filler metal) solder - coating was as excellent as in the preceding example.

### Example 3

Support ribs of sialon were CVD coated with 3μm TiC/TiN/TiC and then brazed on cutting heads of ejector drills. Because of its size such a support rib is sensitive to formation of cracks caused by thermal stresses. On some ribs a check pattern was therefore ground on the surface to be brazed. Metallographical examinations after the brazing showed that the support ribs with check pattern had an essentially smaller number of cracks than ribs without a check pattern.

## Claims

1. A tool for chipforming machining or a wear part comprising a sintered body of cemented carbide or ceramics which has been joined to a holder or similar by conventional brazing or soldering,
**characterized** in, that said sintered body has been coated with one or more wear resistant layers before the brazing or soldering.

2. A tool according to claim 1, **characterized** in, that a metal shim has been placed in the brazing or soldering joint.

3. A tool according to any of the preceding claims, **characterized** in, that said sintered body is of ceramic material, at which the ceramic material has been partly exposed on the surface to be brazed or soldered in a more or less regular pattern.

4. A tool according to claim 3, **characterized** in, that the ceramic material has been exposed by means of grinding.